# EUROPEAN PATENT APPLICATION

(11) **EP 4 585 886 A1**
(43) Date of publication of application: **16.07.2025**
(21) Application number: 25150424.7
(22) Date of filing: 07.01.2025
(51) Int. Cl.: G01F 23/16, G01F 23/24, G01F 23/80, G01F 25/20

(54) **CRYOGENIC STORAGE CONTROL SYSTEM AND STORAGE ASSEMBLY**

(30) Priority: 10.01.2024 US 202463619612 P
(71) Applicant: Tomco2 Systems Company, Loganville, GA 30052-7328 (US)
(72) Inventor: ROMANOS, John L., LOGANVILLE (Georgia), 30052-7328 (US); DAHLGREN, Ryan, LOGANVILLE (Georgia), 30052-7328 (US)
(74) Representative: Fioravanti, Corrado

(57) **Abstract**

A cryogenic storage control system and storage device assembly are provided. The cryogenic storage control system may utilize a dual fill level measurement arrangement in which a differential pressure-based fill level determination is compared to a fill level determined from an array of thermistors positioned at varying depths within the cryogenic storage container. Significant disagreement between fill level determinations may result in an alert being generated by a control system. Additionally, various operational processes may be implemented to ensure proper operation including calibration processes, monitoring processes, and maintenance processes.

## Description

### Background

Cryogenic storage devices have a variety of applications. For example, such storage devices may be used to store biological samples used in testing. Such storage devices often use liquid nitrogen to maintain low temperatures.

Cryogenic storage devices often include both a storage container and a supply of cryogenic fluid. The supply of cryogenic fluid may be fluidically connected to the storage container and may supply cryogenic fluid to the storage container to maintain a desired liquid fill level that may be needed to maintain low temperatures within the storage container.

Typical approaches may use a differential pressure within the storage container to determine an approximate liquid fill level within the storage container. However, this arrangement has drawbacks. For example, such a differential pressure measurement system may become clogged during normal operation of the storage container, for example due to condensation which may form due to introduction of moisture when the container is opened and closed. Such a clogging event may result in incorrect fill level measurements, or may fail to identify when fluid is below an alarm level. Still further, existing cryogenic storage devices lack adequate visibility into the device for retrieval of stored items (e.g., biologic samples and the like). Recently, lighting arrangements have been introduced into such cryogenic storage containers. However, these lighting arrangements are often difficult to access and service, particularly at the low temperatures involved within the interior volume of a cryogenic storage container.

Still further, use of cryogenic storage containers may be difficult at times, for example when the calibration or initial calibration is required to obtain accurate fill level information. A lengthy calibration process involving use of a dipstick and both depressurized and pressurized calibration processes may be required, which may result in significant delay between a time of installation and a time when a cryogenic storage container becomes available for use.

It is in view of these issues the cryogenic storage control system and storage assembly of the present disclosure is provided.

### Summary

In general terms, a cryogenic storage control system and storage device assembly are provided. The cryogenic storage control system may utilize a dual fill level measurement arrangement in which a differential pressure-based fill level determination is compared to a fill level determined from an array of thermistors positioned at varying depths within the cryogenic storage container. Significant disagreement between fill level determinations may result in an alert being generated by a control system. Additionally, various operational processes may be implemented to ensure proper operation including calibration processes, monitoring processes, and maintenance processes. In some further examples, a lighting assembly with a readily replaceable lighting element may be provided that can be installed within an interior volume of such a cryogenic storage device.

In an example aspect, a cryogenic storage assembly includes a cryogenic storage container having an interior volume. The cryogenic storage assembly further includes a differential pressure system configured to obtain a differential pressure measurement within the interior volume, and a thermistor array assembly positioned within the interior volume, the thermistor array including a plurality of thermistors positioned at predetermined depths within the interior volume. The cryogenic storage assembly further includes a cryogenic storage control system including a processor and a memory. The cryogenic storage control system is configured to: obtain, via the differential pressure system, a pressure at a top of the interior volume and a pressure proximate to a bottom of the interior volume, and determine an estimated fill level of cryogenic liquid within the interior volume; obtain, via the thermistor array, a resistance of each thermistor indicative of a temperature at each of the predetermined depths, and determine a second estimated fill level of cryogenic liquid within the interior volume based on the temperature; compare the estimated fill level to the second estimated fill level; and based on a difference between the estimated fill level and the second estimated fill level being above a threshold, generating an alert indicating malfunction of at least one of the differential pressure system or the thermistor array assembly.

In a further example aspect, a method of operating a cryogenic storage system is disclosed. The method includes obtaining, via a differential pressure system, a pressure at a top of an interior volume of a cryogenic storage container and a pressure proximate to a bottom of the interior volume, and determining an estimated fill level of cryogenic liquid within the interior volume. The method also includes obtaining, via a thermistor array disposed within the interior volume and including a plurality of thermistors positioned at predetermined depths within the interior volume, a resistance of each thermistor indicative of a temperature at each of the predetermined depths, and determining a second estimated fill level of cryogenic liquid within the interior volume based on the temperature. The method further includes comparing the estimated fill level to the second estimated fill level. The method also includes, based on a difference between the estimated fill level and the second estimated fill level being above a threshold, generating an alert indicating malfunction of at least one of the differential pressure system or the thermistor array assembly.

### Brief description of the drawings

Fig. 1 illustrates a schematic diagram of a cryogenic storage system including a cryogenic storage device, according to an example embodiment.
Fig. 2 illustrates a schematic diagram of a cryogenic storage control system according to an example embodiment.
Fig. 3 is a top perspective view of a cryogenic storage assembly including a cryogenic storage control system and cryogenic storage device, according to an example embodiment.
Fig. 4 is a bottom perspective view of the cryogenic storage assembly of Fig. 3.
Fig. 5 is a front plan view of the cryogenic storage assembly of Fig. 3.
Fig. 6 is a rear plan view of the cryogenic storage assembly of Fig. 3.
Fig. 7 is a side plan view of the cryogenic storage assembly of Fig. 3.
Fig. 8 is a top plan view of the cryogenic storage assembly of Fig. 3.
Fig. 9 is a bottom plan view of the cryogenic storage assembly of Fig. 3.
Fig. 10 is a side cross-sectional view along plane A-A defined in Fig. 8.
Fig. 11 is a side cross-sectional view along plane B-B defined in Fig. 8.
Fig. 12 is a side view of a thermistor array assembly useable within the cryogenic storage assembly of Fig. 3.
Fig. 13 is an exploded view of the cryogenic storage assembly of Fig. 3.
Fig. 14 is an exploded view of the cryogenic storage control system useable within the cryogenic storage assembly of Fig. 3.
Fig. 15 is an exploded view of a valve assembly and portions of the cryogenic storage control system useable within the cryogenic storage assembly of Fig. 3.
Fig, 16 is a side cross-sectional view along plane C-C defined in Fig. 8.
Fig. 17 is an exploded view of a lighting assembly useable within the cryogenic storage assembly of Fig. 3.
Fig. 18 is a perspective view of a valve assembly useable within the cryogenic storage assembly of Fig. 3.
Fig. 19 illustrates a perspective view and an exploded view of a main control unit of a cryogenic storage control system.
Fig. 20 illustrates a perspective view and an exploded view of a lighting assembly driver unit of a cryogenic storage control system.
Fig. 21 illustrates a perspective view and an exploded view of an input/output unit of a cryogenic storage control system.
Fig. 22 illustrates a user interface displayable via the cryogenic storage assembly control system, indicating current level and temperature readings.
Fig. 23 illustrates a user interface displayable via the cryogenic storage assembly control system, indicating a filling status of the storage container.
Fig. 24 illustrates a user interface displayable via the cryogenic storage assembly control system, indicating historical fill levels and temperatures.
Fig. 25 illustrates a user interface displayable via the cryogenic storage assembly control system, indicating fill levels and temperatures.
Fig. 26 illustrates a user interface displayable via the cryogenic storage assembly control system, providing a top-level control menu.
Fig. 27 illustrates a user interface displayable via the cryogenic storage assembly control system, providing a top-level control menu after selection of a temperature option.
Fig. 28 illustrates a user interface displayable via the cryogenic storage assembly control system, providing a temperature status and control interface.
Fig. 29 illustrates a user interface displayable via the cryogenic storage assembly control system, providing a temperature threshold setting screen.
Fig. 30 illustrates a user interface displayable via the cryogenic storage assembly control system, providing a control menu after selection of a level option.
Fig. 31 illustrates a user interface displayable via the cryogenic storage assembly control system, providing a fill level and alarming display.
Fig. 32 illustrates a user interface displayable via the cryogenic storage assembly control system, providing a fill level timing display.
Fig. 33 illustrates a user interface displayable via the cryogenic storage assembly control system, providing a control menu after selection of an alarm option.
Fig. 34 illustrates a user interface displayable via the cryogenic storage assembly control system, providing an alarm activation menu in response to selection of the alarm option.
Fig. 35 illustrates a user interface displayable via the cryogenic storage assembly control system, providing a lid function menu after selection of a settings option.
Fig. 36 illustrates a user interface displayable via the cryogenic storage assembly control system, illustrating adjustments within the lid function menu of Fig. 35.
Fig. 37 illustrates a user interface displayable via the cryogenic storage assembly control system, illustrating further adjustments to automatic operations within the lid function menu of Fig. 35.
Fig. 38 illustrates a user interface displayable via the cryogenic storage assembly control system, providing a scheduled events menu option after selection of a settings option.
Fig. 39 illustrates a user interface displayable via the cryogenic storage assembly control system, providing a scheduled events interface.
Fig. 40 illustrates a user interface displayable via the cryogenic storage assembly control system, illustrating setting of a scheduled fill within the scheduled events interface of Fig. 39.
Fig. 41 illustrates a user interface displayable via the cryogenic storage assembly control system, illustrating setting of scheduled fill parameters.
Fig. 42 illustrates a user interface displayable via the cryogenic storage assembly control system, illustrating setting a check level reminder after selection of a settings option.
Fig. 43 illustrates a user interface displayable via the cryogenic storage assembly control system, illustrating a level alert.
Fig. 44 illustrates a user interface displayable via the cryogenic storage assembly control system, illustrating a further example display of the level alert of Fig. 43.
Fig. 45 illustrates a flowchart of a method of monitoring and controlling fill levels within a cryogenic storage container using a cryogenic storage control system, according to an example embodiment.
Fig. 46 illustrates a flowchart of a method of performing calibration of pressure and fill level in a cryogenic storage assembly, according to an example embodiment.
Fig. 47 illustrates a flowchart of a method of determining to perform a purge event and initiating a purge event at a cryogenic storage control system.

### Detailed description

As briefly described above, embodiments of the present invention are directed to a cryogenic storage assembly that includes a cryogenic storage control system interfaced to a cryogenic storage container. Such a system has a number of aspects that provide advantages relative to existing systems.

In some examples, a cryogenic storage system includes an array of thermistors or other temperature sensing devices that may be positioned at predetermined depths within a cryogenic storage container. By obtaining sensor readings from each of the thermistors in the array, a liquid level may be determined. This liquid level may be used in conjunction with, or as a replacement for, a liquid level determined through differential pressure determinations between a top portion and a bottom portion of the cryogenic storage container as is generally used in such container systems today. Accordingly, in case of failure of one or the other of these systems, appropriate liquid level measurements may be maintained and communicated to other systems remotely. Additionally, when differential pressure and thermistor-based level sensing are in disagreement, alerts may be generated. Accordingly, a liquid level validation process may be performed.

In other examples, a calibration process may be performed associated with a cryogenic storage container. Such a calibration process may involve performing a high-pressure calibration test, and then de-pressurizing the cryogenic storage container and performing a dipstick-based test. By performing the high-pressure calibration test first, a user may avoid having to await re-pressurization to complete calibration.

In further examples, a lighting assembly may be positionable within an interior volume of the cryogenic storage container. The lighting assembly may be configured to eliminate upon detection of opening of the cryogenic storage container, and may include a lighting element that is easily replaceable even at extreme temperatures. Specifically, a lighting element, such as a light emitting diode array, may be positioned on a lighting assembly and at a location within the interior volume that is easily accessible and replaceable for maintenance purposes. A mechanism for retention and replacement of portions of such a lighting assembly are provided.

Still further, in some examples, an automated purge process may be performed at predetermined times by the cryogenic storage system. For example, a gas which corresponds to the vaporized or evaporated cryogenic fluid may be routed through the differential pressure lines that lead into the cryogenic storage container. By periodically opening valves to route such gas through differential pressure tests lines, the cryogenic storage system may mitigate the effect of potential condensation that may form in those lines, thereby reducing the extent to which compensation might freeze and cause clogged lines. Such a purge process may be performed periodically (e.g., daily at particular times of day, or of the week) or upon initial fill of the cryogenic storage container.

In still further examples, the above features of a cryogenic storage system and operational processes may be easily programmable via a control system, for example via a touch screen display that presents a series of user interfaces facilitating control of such a system. The programmable processes, and user interfaces, provide improved and simplified control over such a cryogenic storage system, thereby improving overall user experience.

### I. Cryogenic Storage Assembly and Control System, Generally

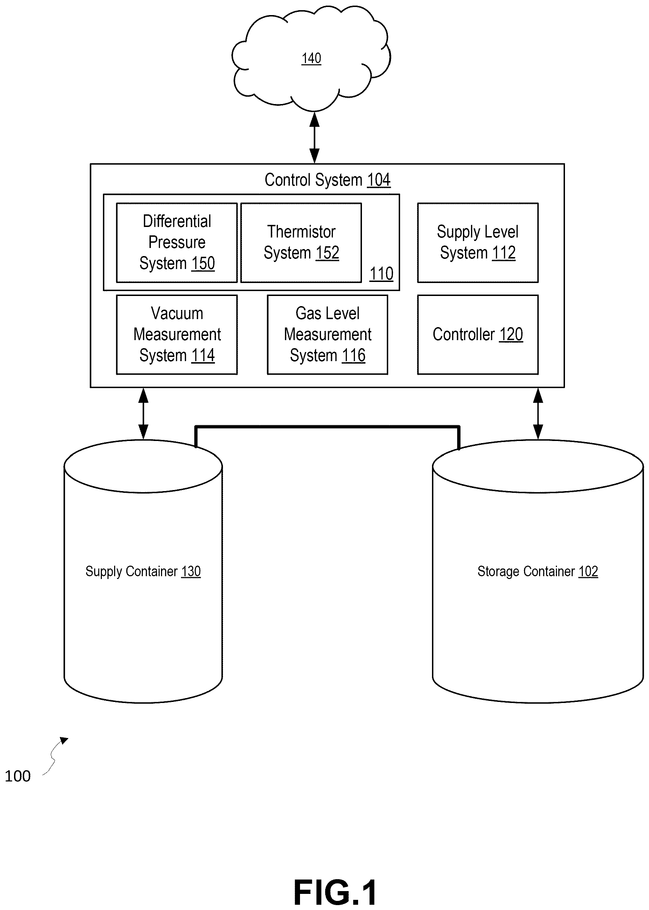

Referring first to Figs. 1-2, a general schematic diagram of a cryogenic storage system 100 including a cryogenic storage device is illustrated, according to an example embodiment. The cryogenic storage system 100 may be used in a variety of types of applications, such as storage of various biological samples; examples of materials preserved by cryopreservation may include blood cells, stem cells, eggs, embryos, plant germplasm, and medications. The cryogenic storage system 100 may be installed at a medical facility, cryogenic bank, clinic, laboratory, and various other locations.

In the example illustrated, the cryogenic storage system 100 includes a storage container 102 operatively connected to a control system 104. The control system may include a fluid level monitoring system 110, a supply level system 112, a vacuum measurement system 114, a gas level measurement system 116, and a controller 120. The control system 104 may further be operatively connected to a supply container 130 that holds a supply of cryogenic fluid. The control system 104 may control flow of cryogenic fluid from the supply container 130 to the storage container 102 as needed, for example by actuating particular valves at a defined timing or schedule, or in response to particularized events, and the like. The control system 104 may also monitor operating conditions of the cryogenic storage system 100 generally, including conditions within the storage container 102.

In example embodiments, the fluid level monitoring system 110 may include a differential pressure system 150 and a thermistor system 152. The differential pressure system 150 can include two tubes originating on an upper head of the storage container and extending into the interior volume of the storage container where cryogenic fluid is present. In some configurations, a high-pressure port connects to a tube extending to and terminating in a lower portion of the storage container 102 within its interior volume, while a second lower pressure tube extends into an upper section of the interior volume (e.g., above an intended fill level). Liquid cryogenic fluid presses against gaseous evaporation, such that as there is more liquid cryogenic fluid within the container, the pressure will increase on the higher-pressure measurement. A differential maintained between the high pressure and low pressure is utilized to determine a level of liquid cryogenic fluid in the storage container 102. A buildup of pressure in the storage container 102 due to evaporation is measured by both high pressure and low-pressure ports. The high pressure and the low-pressure measurements are communicated to the controller 120, which interprets the differential pressure into a level.

In some implementations, the thermistor system 152 includes a set of thermistors installed onto a printed circuit board at particular locations along the length of the circuit board. The circuit board may be installed into a tube extending down through the annular space into the interior volume of the storage container where cryogenic fluid is present. In some implementations, the tube has entry points into the inner chamber at two points. The first point may be proximate a bottom of the storage container to allow cryogenic fluid to enter the tube and achieve equilibrium with the level inside the storage container. The second entry point can be located in the upper part of the inner chamber above the pool of cryogenic fluid, allowing fluid to flow into the tube to a level that is the same elsewhere within the storage container. Accordingly, the thermistors may be exposed to the cryogenic fluid and may experience a corresponding resistance change that may be detected by the controller 120, and a liquid level within the storage container 102 may therefore be calculated. Details regarding a thermistor assembly useable within a cryogenic storage system are provided below.

In example embodiments, the supply level system 112 may monitor a level of cryogenic fluid available in the supply container 130. The supply level system 112 may be implemented similarly to the fluid level monitoring system 110 described above, or may alternatively only include one of the types of fluid monitoring (e.g., differential pressure or use of a thermistor array).

In example embodiments, the vacuum measurement system 114 and gas level measurement systems 116 may optionally be included as well, and may be used to measure other operational aspects of the cryogenic storage system 100.

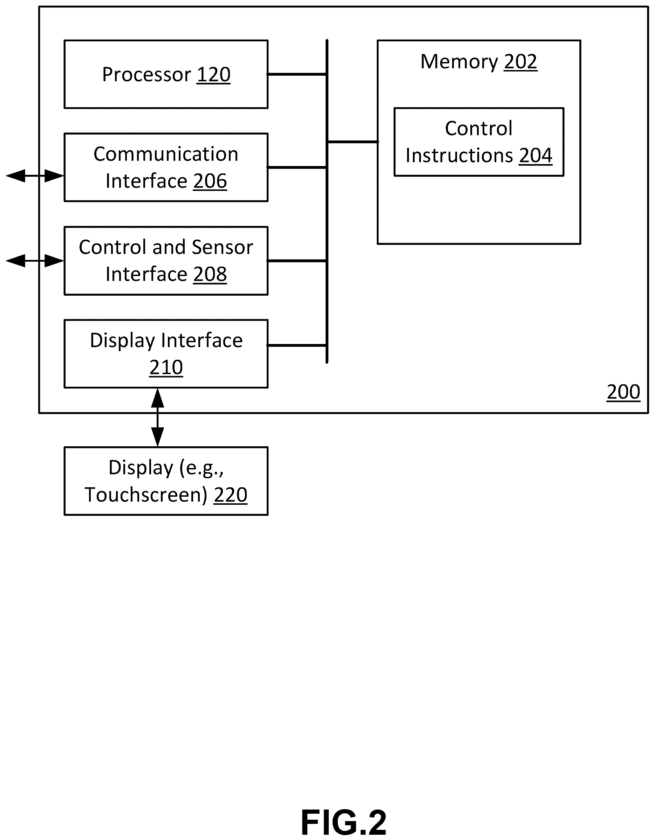

In example embodiments, the processor 120 may be a microprocessor-based controller and may be communicatively connected to various sensing systems of the cryogenic storage system 100, as well as to output and/or user interface devices. An example of a control system 104 implementing such a processor 120 is illustrated in Fig. 2.

In example implementations, the control system 104 may be communicatively connected to a remote computing system, for example via cloud 140. One or more remote computing systems may be able to access and control the cryogenic storage system 100 via such communication connection. In some examples, a cloud account may be made accessible to one or more users who may monitor operation of the cryogenic storage system 100. In such implementations, such remote users, for a user of the control system 104, may view, monitor, and change settings related to operational parameters of one or more cryogenic storage systems 100, including the one shown as well as others that may be maintained within a common account or by the same organization.

Fig. 2 illustrates a schematic diagram of a cryogenic storage control system according to an example embodiment. The cryogenic storage control system 200 may be used, for example, to implement the control system 104 described above.

In the example shown, the cryogenic storage control system 200 includes the processor 120, as well as a memory 202 storing control instructions 204 usable to implement the operation, monitoring, communication, and maintenance processes described herein. In this example, the cryogenic storage control system 200 further includes a communication interface 206, a control and sensor interface 208, and a display interface 210.

In examples, the communication interface 206 facilitates communication with one or more external systems, such as a cloud system or other remote computing devices. The communication interface 206 may include a wired communication interface and/or a wireless communication interface according to any of a variety of communication protocols (e.g., Wi-Fi, ethernet-based communication, and the like). The control and sensor interface 208 includes a local communication bus usable to carry signals between one or more sensor circuits, control circuits, and the processor 120. For example, the control and sensor interface 208 receives signals from temperature and/or pressure sensors used as liquid level, gas level, or other types of sensors associated with the cryogenic storage container, and may send commands to one or more valves that actuate to allow flow of cryogenic fluid between a supply and the storage container. Other types of control mechanisms are possible as well.

In the example shown, the display interface 210 is communicatively connected to a display 220, such as a touch screen display that may be positioned proximate to the cryogenic storage container 102. An example of such a touchscreen displayed is illustrated in example embodiments described below. In general, the display interface 210 generates user interfaces to be presented on the display 220 based on execution of the control instructions 204. Specific user interfaces and operations are described in further detail below in Parts III-IV.

### II. Cryogenic Storage Assembly Construction

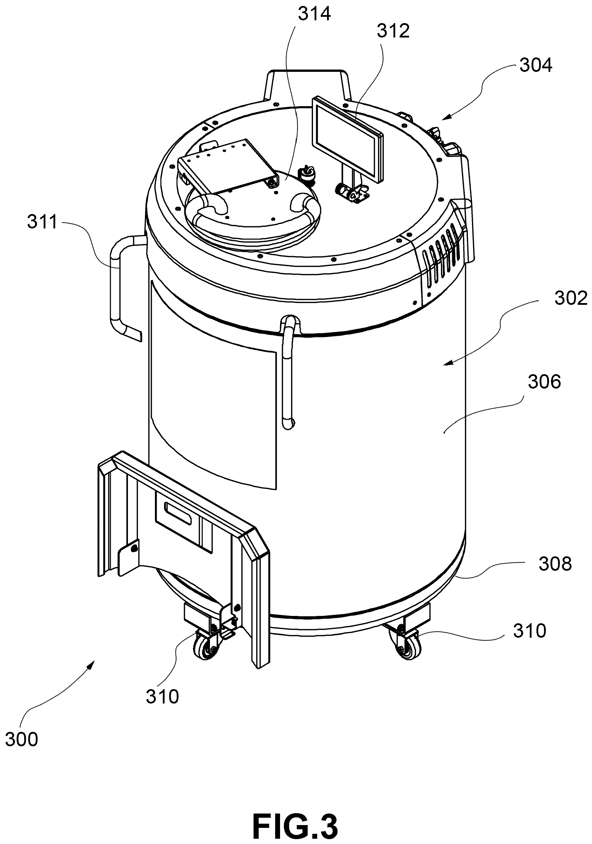

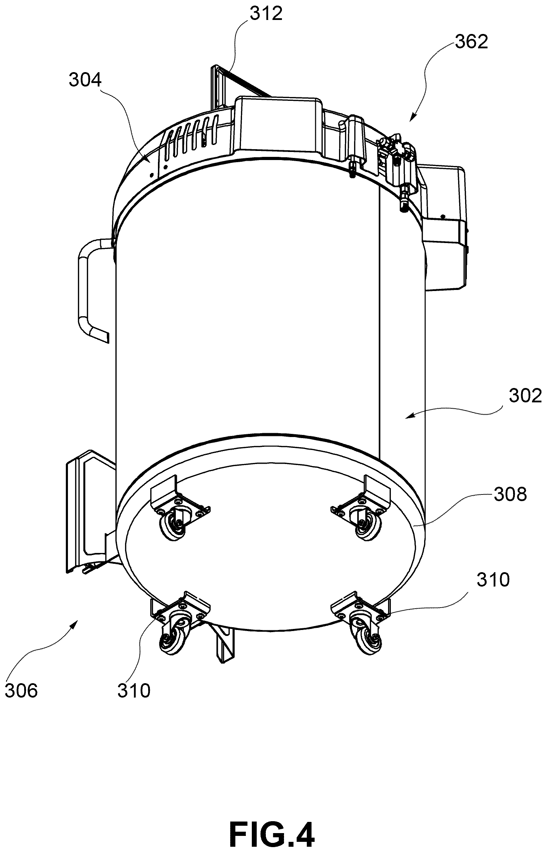

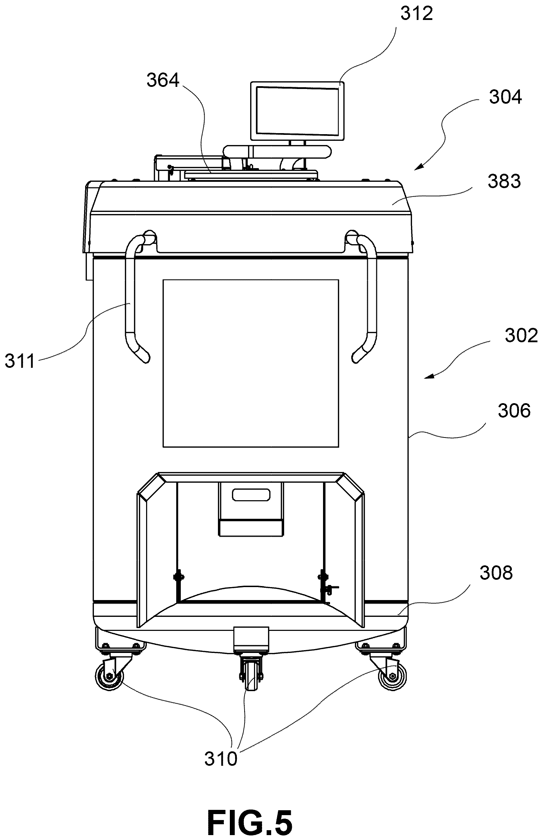

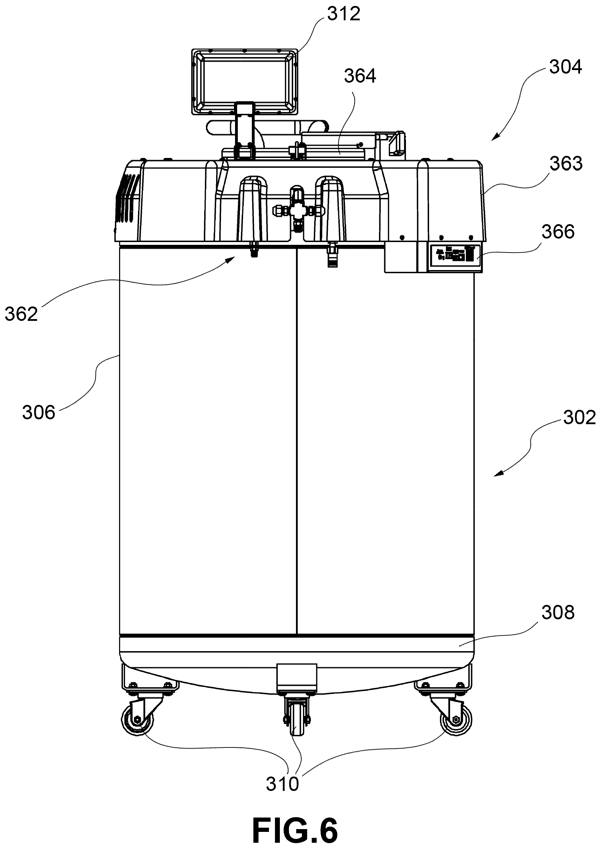

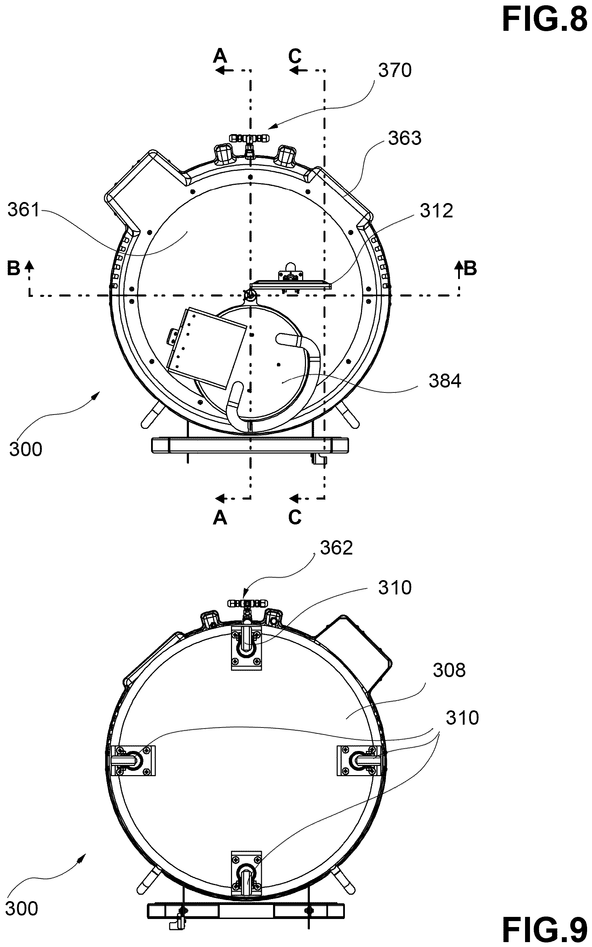

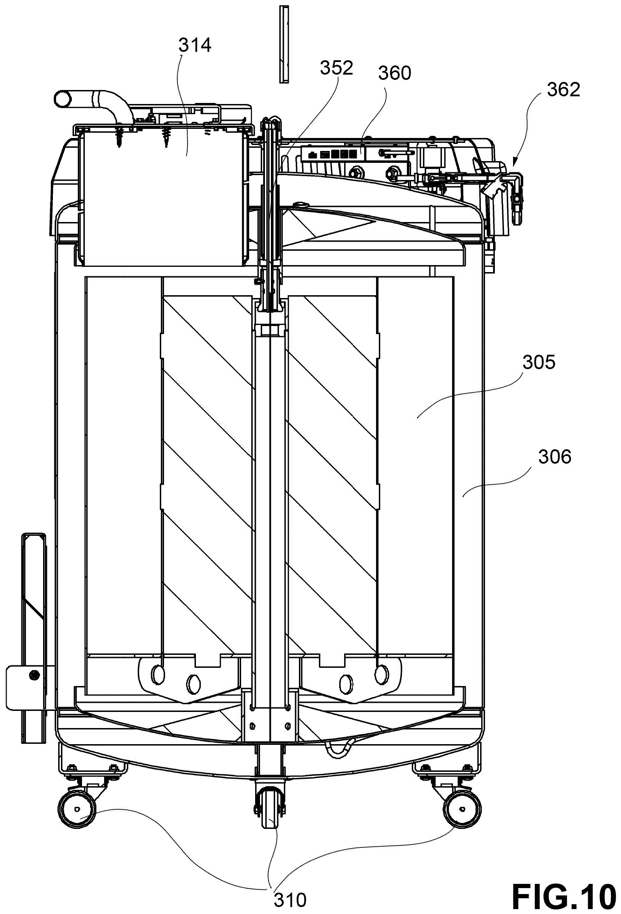

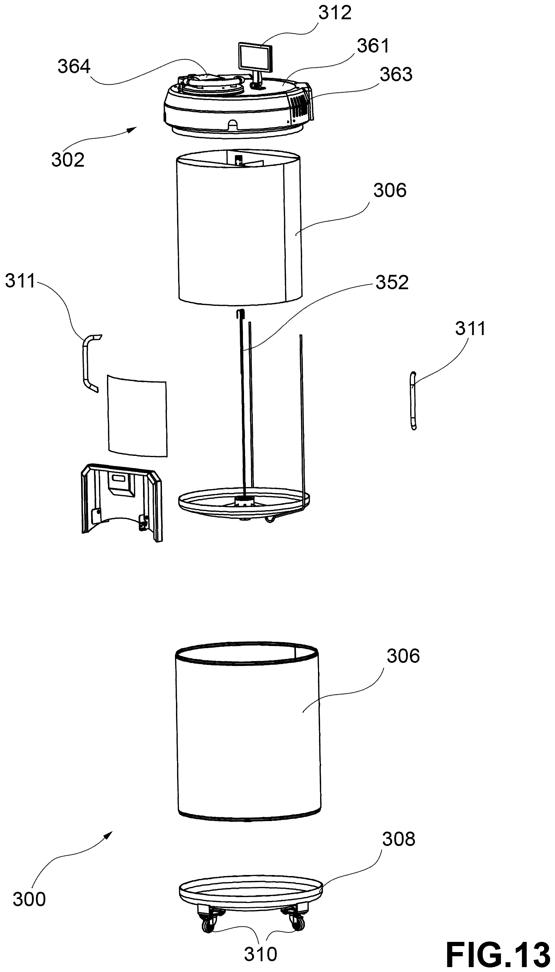

Referring to Figs. 3-22, detailed diagrams of a particular embodiment of a cryogenic storage assembly that includes a cryogenic storage control system and a cryogenic storage device (including a cryogenic storage container) is shown. Figs. 3-13, in particular, illustrate a cryogenic storage assembly 300, according to an example embodiment.

In the example shown, the cryogenic storage assembly 300 includes a cryogenic storage container 302 and a cryogenic storage control system 304, implemented as a head unit on the cryogenic storage container.

The cryogenic storage container 302, as implemented, is cylindrical and has an interior volume 305 surrounded by insulating sidewalls 306. The cryogenic storage container 302 includes a base 308 having a plurality of mounted caster wheels 310 mounted thereon for portability. A set of handles 311 allows for manual manipulation of position of the cryogenic storage container.

The cryogenic storage control system 304 includes a touch screen control interface 312, as well as an access port 314 (enclosed by cover 364) providing access into the interior volume 305 of the cryogenic storage container 302, for example through a top wall arrangement 313 including one or more insulating walls of the cryogenic storage container.

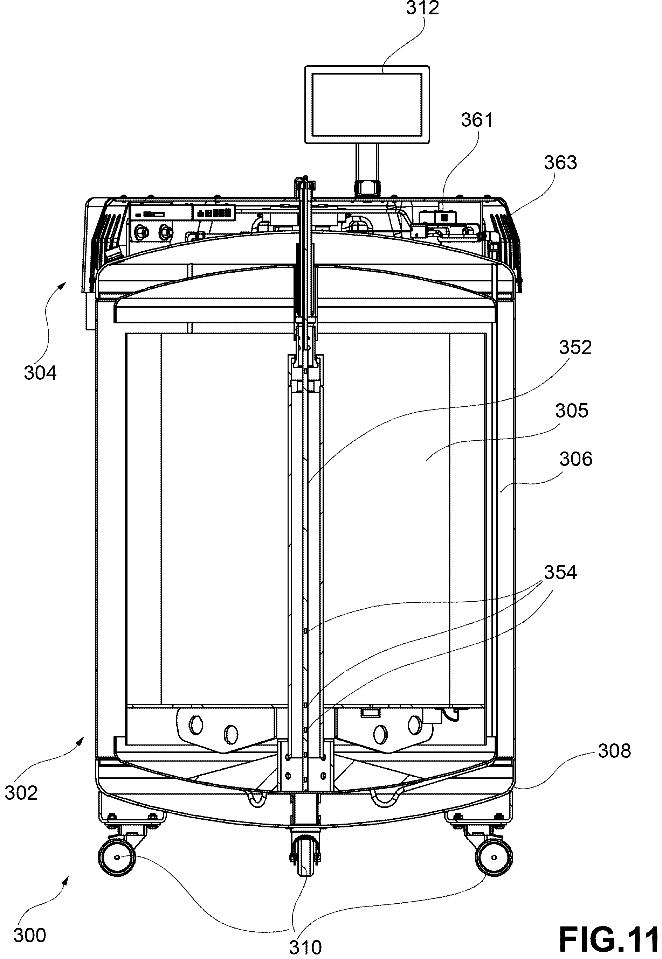

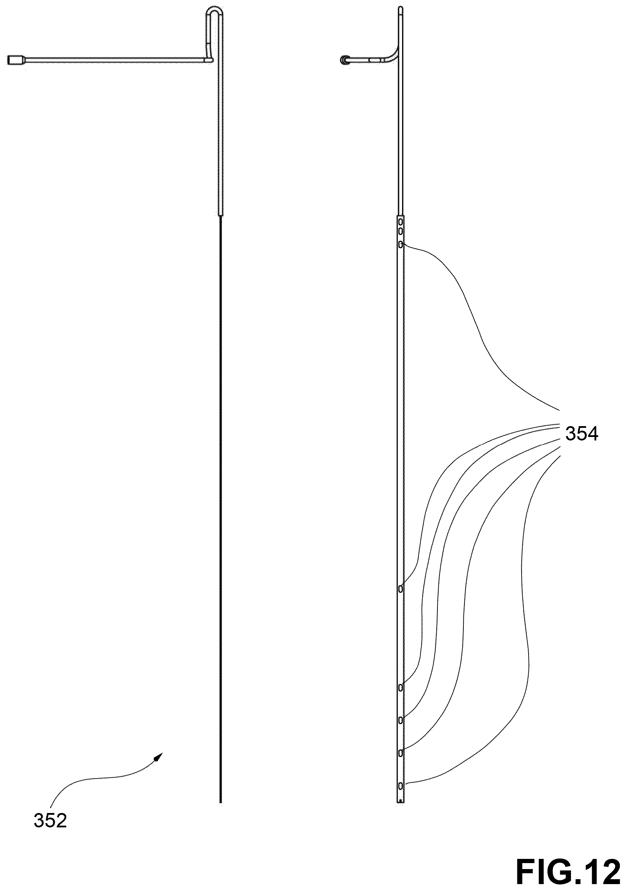

And seen most clearly in Fig. 11 and Fig. 12, a vertical tube 350 extends into the interior volume 305 and retains a conduit 352 along which a plurality of thermistors 354 are disposed. When installed within the interior volume 305, the thermistors 354 are positioned at varying, known depths. For example, the plurality of thermistors 354 may include a first thermistor at a depth of 1 inch, a second thermistor at a depth of 3 inches, a third thermistor at a depth of 5 inches, a fourth thermistor at a depth of 7 inches, a fifth thermistor at a depth of 13 inches, and a sixth thermistor at a depth of 34 inches. In the example shown, the vertical tube 350 is positioned generally centrally within the interior volume 305; in alternative embodiments, the vertical tube 350 may be positioned offset within the interior volume 305, while still generally extending along the entire depth of the container. Additionally, different numbers or depths of thermistors may be selected.

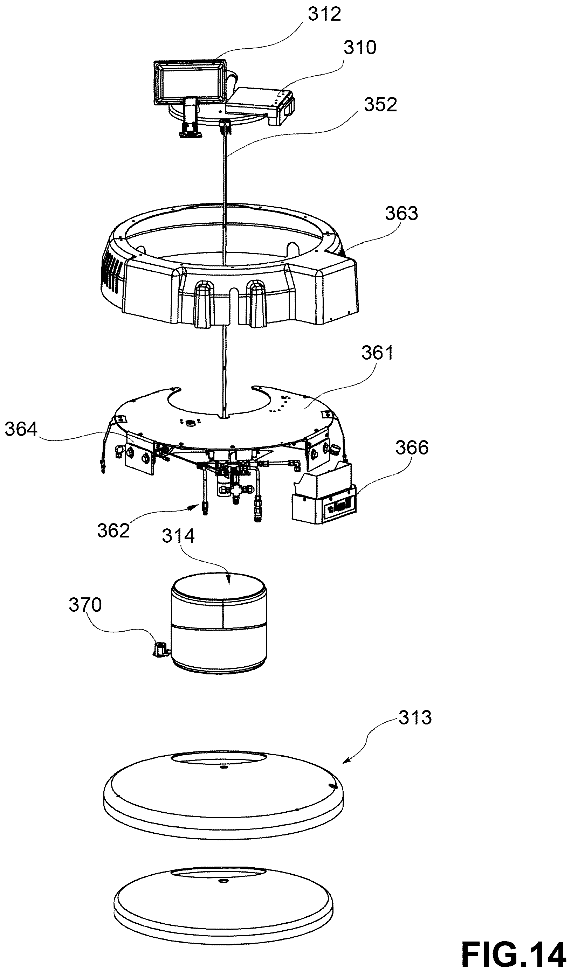

Fig. 14 illustrates further details of a cryogenic storage control system 304 as implemented as a head unit on cryogenic storage container 302. In the example shown, a main control unit 360 is communicatively connected to a plurality of valves and sensors, including the thermistors 354 which extend downward from the cryogenic storage control system 304 into the interior volume of the cryogenic storage container, the touch screen control interface 312, valve assembly 362, a lighting assembly 370, and various other sub control units, including a lighting assembly driver unit 364 and an input/output unit 366. The control unit 360 may be mounted to a bonnet 361 that is retained in place by a collar 363. The bonnet and collar cooperatively enclose various conduit assemblies, including valve assembly 362. A portal 365 provides an opening connecting between a cover 364 and into the interior volume.

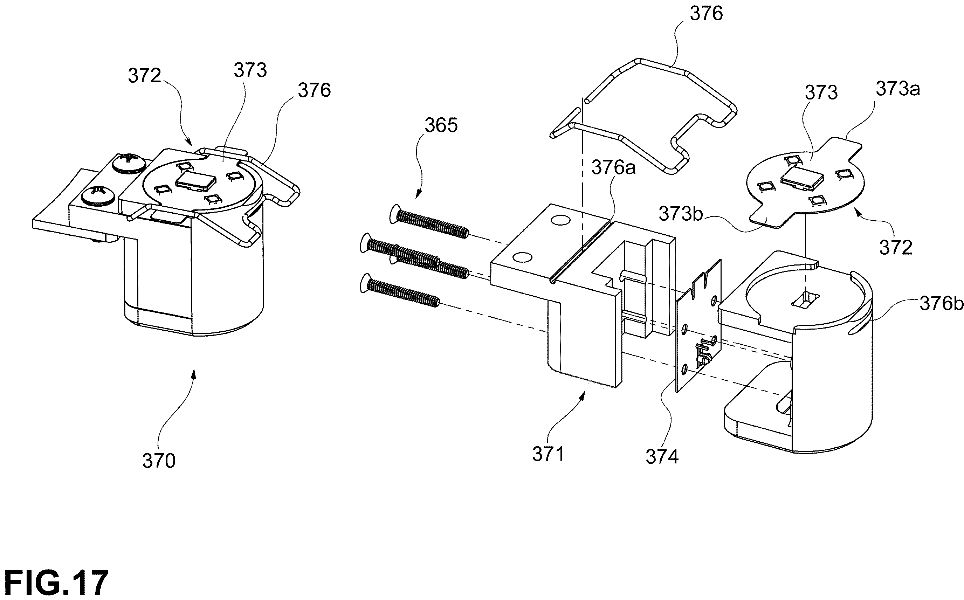

Fig. 17 illustrates further details of the lighting assembly 370, in an example embodiment. In this example, the lighting assembly 370 includes an assembly support 371 and a lighting element array 372 mounted onto a removable circuit board 373. The lighting element array 372 includes a plurality of lighting elements, such as light emitting diodes, and has a conductive connection on an underside of the circuit board 373 that is attachable to a card edge of a circuit board 374 when the circuit board 373 is mounted onto the assembly support 371. The circuit board 374 is mounted within the assembly support 371 and electrically connected to lighting assembly driver unit 364. As such, the main control unit 360 may send signals to the lighting assembly driver unit 364 to actuate the lighting element array 372.

In the example shown, the assembly support 371 is mountable within the interior volume 305 via bolts 365, and the lighting element array 372, and removable circuit board 373, are held in place onto the card edge of circuit board 374 via a spring clip 376. The spring clip is retained by notches 377a-b, and retains the circuit board 373 by extending over tab portions 373a-b of that circuit board. The spring clip 376 is readily removable manually and oriented toward the cover 364, such that a user may easily reach into the interior volume 305 and release the spring clip 376 in order to replace the lighting element array 372.

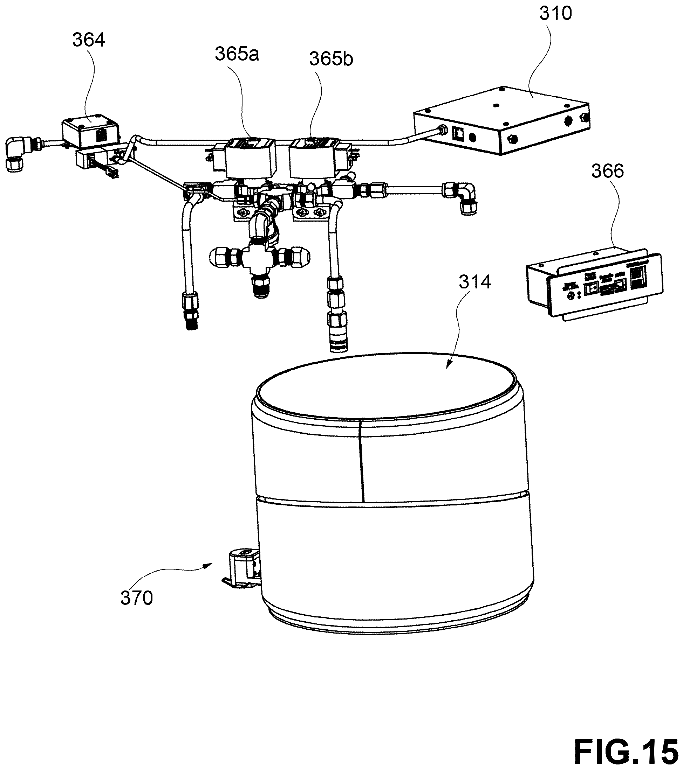

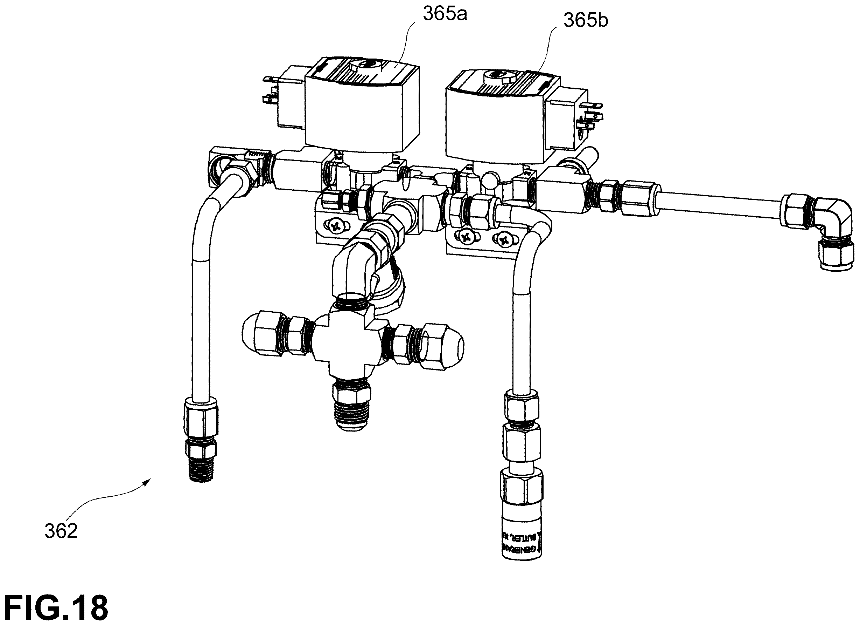

As seen most clearly in Figs. 15 and 18, the valve assembly 362 is communicatively connected to the main control unit 360 and input/output unit 366. The valve assembly 362 includes a plurality of electrically actuated valves 365a-b, which may be opened or closed by the main control unit 360. The electrically actuated valves 365a-b may be individually or collectively actuated from the main control unit 360 on a predetermined schedule to flow cryogenic liquid into the interior volume of the container, to enable withdrawal of cryogenic liquid, to perform a defog process (as described below) or the like.

In the example shown in Fig. 18, a portion of the valve assembly 362 includes valves 365a-b, which are actuatable by the main control unit 360. Supply lines extend between those valves and the interior volume, as well as to a supply of cryogenic fluid. Additionally, an outlet allows for warmed gas to be expelled and vented during the syllable process to avoid it being recirculated for otherwise entering the fluid circuit.

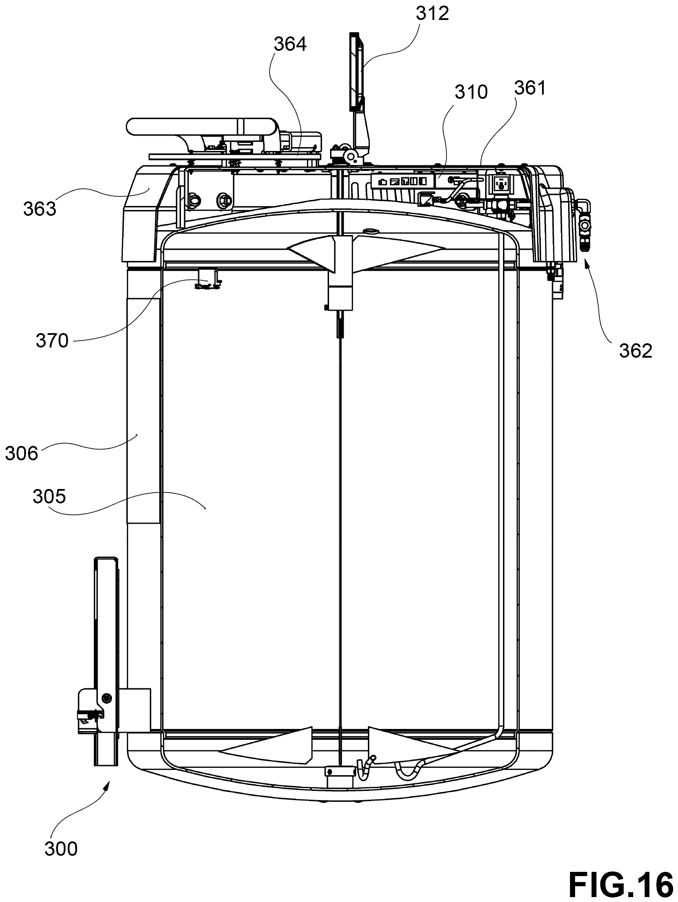

As seen most clearly in Fig. 16, the lighting assembly 370 is mounted such that it is retained within the interior volume 305, and electrically connected such that in response to opening the cover, the light will be activated by the control system 304, e.g., by the main control unit 360. The main control unit 360 may send an actuation message to the lighting assembly driver unit 364 to operate the lighting assembly 370, for example in response to detection that the cover 364 is opened.

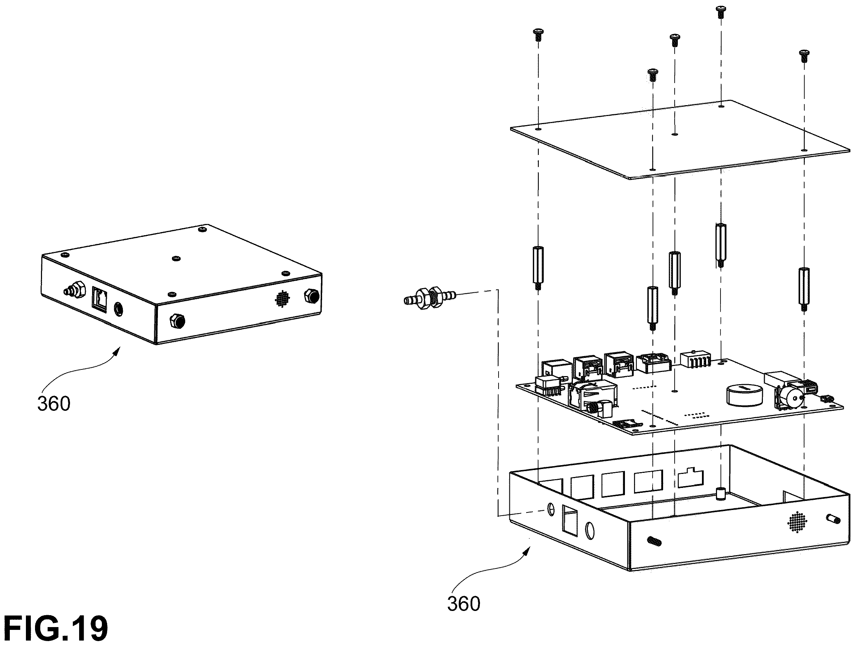

Fig. 19 illustrates a perspective view and an exploded view of the main control unit 360. The main control unit 360 may be retained within a metallic enclosure, and mounted above the cryogenic storage container, and may include processing circuitry, communication circuitry, and connections to various sensor equipment and valve signal lines. In some examples, the main control unit 360 is connected to a communication bus on which sensor signals are received and valve actuation commands are provided. As illustrated in Fig. 14, the main control unit 360 may be mounted above a collar 363, for example to the bonnet 361 or cover 364, such that the main control unit can readily determine a position of the cover 364 relative to the bonnet and collar.

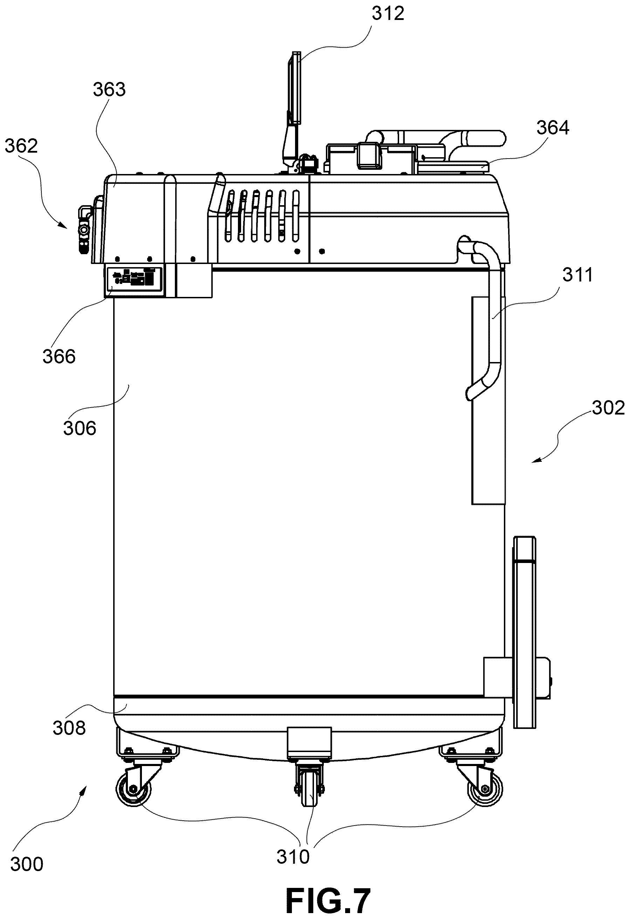

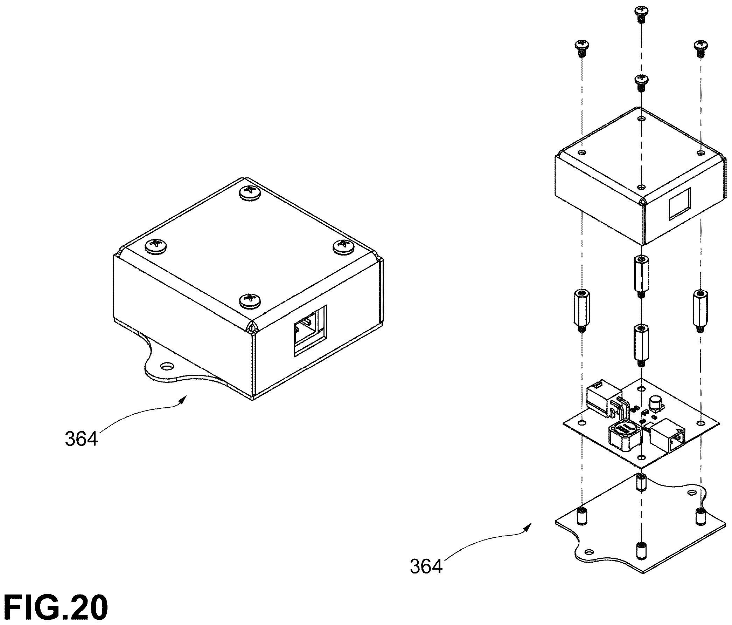

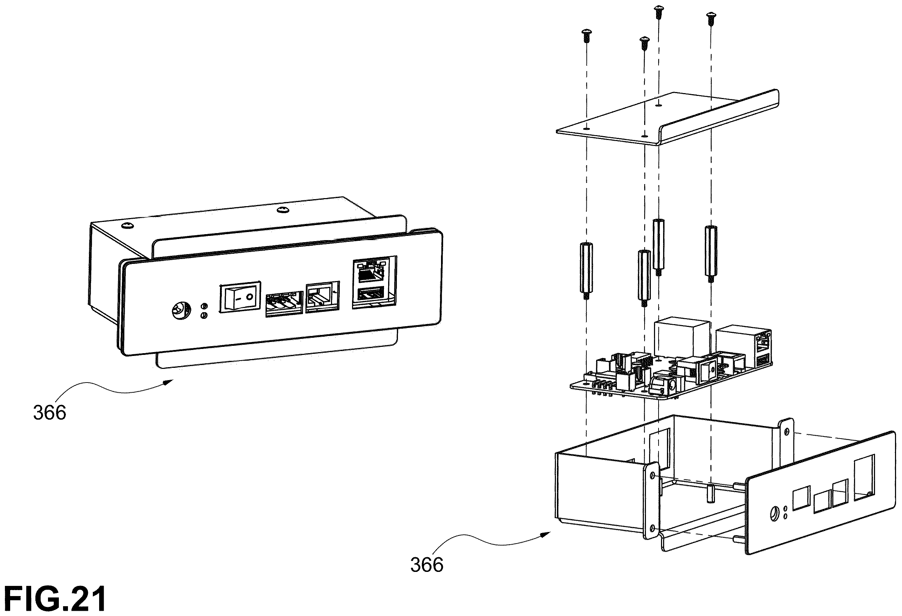

Fig. 20 illustrates a perspective view and an exploded view of the lighting assembly driver unit 364. The lighting assembly driver unit 364 may be mounted below the bonnet 361 within a separate enclosure, and encased by the collar 363, and positioned to provide electrical communication between the main control unit 360 and the lighting assembly 370. Additionally, as seen in Fig. 21, the input/output unit 366 may be positioned or mounted below the bonnet 361. The input/output unit 366 may extend below and be exposed below the collar 363, as seen in Fig. 7, and can include an AC power input connection, an on/off switch, and various wired and/or wireless communication interfaces. The input/output unit 366 may be in a wired connection to the main control unit 360 and can facilitate external communication therefrom. For example, the input/output unit 366 may implement the communication interface 206 of Fig 2, in some embodiments.

Referring to Figs. 3-20 generally, it is noted that the fill level sensing systems, lighting systems, and valve assemblies as described herein may be utilized by control mechanisms and methodologies described below, and may be controlled using user interfaces of Part III, to provide convenient and reliable control of a cryogenic storage assembly. Although particular embodiments and arrangements of devices are disclosed herein, it is understood that the present disclosure, including the controls and user interfaces, are not limited to use with such a specific device does not mean. Variations are within the scope of one skilled in the art.

### III. Cryogenic Storage Assembly, User Interfaces for Control System

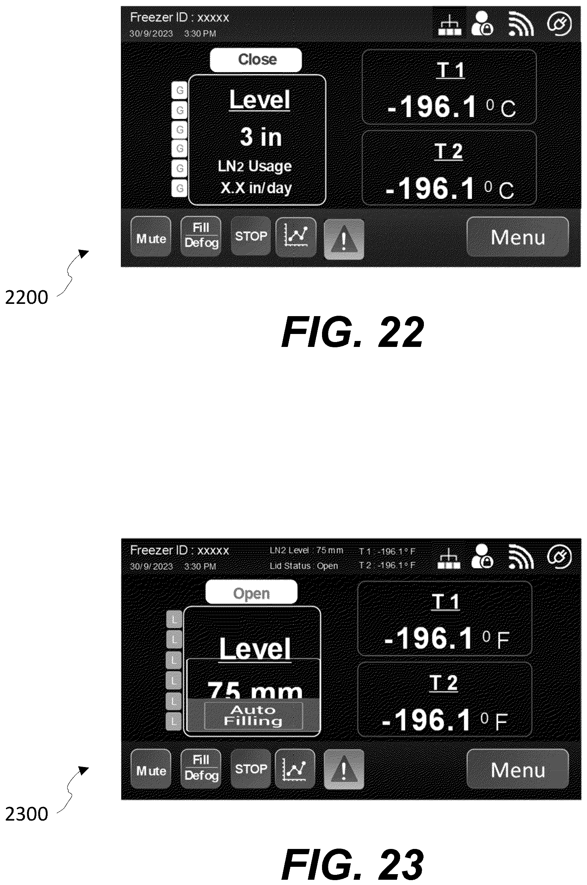

Referring now to Figs. 22-44, user interfaces are presented that illustrate manner of control of a cryogenic storage assembly as illustrated. The user interfaces may be presented on a display, such as a touch screen display as described above, or many be displayed on a remote device to provide remote control of a cryogenic storage system as described herein. Generally speaking, the user interfaces allow a user to set and view alerts associated with the sensing systems described above, and to enable automated operations and monitoring of such a cryogenic storage system.

Fig. 22 illustrates a user interface 2200 displayable via the cryogenic storage assembly control system, indicating current level and temperature readings. The user interface 2200 presents a home screen that displays operational status of a cryogenic storage container in accordance with example embodiments. In the example shown, the user interface 2200 includes a liquid level display graphic and a temperature graphic. The user interface 2200 further illustrates a lid status, a network status, a user login status, a wireless connection status, and a plurality of buttons usable to access various functions of the cryogenic storage system. The buttons include an alarm mute button, a manual fill or manual defog button, a menu button, an emergency stop button, a log page button, and an error list graphic.

In particular, in the liquid level display graphic, a plurality of sub graphic indicators are presented along a side of an overall liquid level display. Within the liquid level display, a total level of liquid cryogenic fluid is displayed, alongside fluid usage. The sub graphic indicators generally correspond to depth at which individual thermistors of a thermistor array are disposed, and graphically illustrates a comparison between the thermistor array readings and the level that is displayed within the main graphic. In some examples, the level within the main graphic may be obtained through a differential pressure assessment, and may be visually comparable to the sub graphic indicators to determine agreement between the two for purposes of liquid level monitoring.

Fig. 23 illustrates a user interface 2300 displayable via the cryogenic storage assembly control system, indicating a filling status of the cryogenic storage container. The user interface 2300 generally corresponds to user interface 2200, but while in an automatic filling status. In this example, an auto filling graphic is presented within the main liquid level display, a lid status is shown as "open", and the sub graphic displays are showing that each liquid level is corresponding to liquid, rather than gas. The sub graphic displays may be updated once filling is complete, and the thermistors again are able to reach a steady state and compare temperature between liquid and gas regions within the cryogenic storage container.

Although illustrated as an "auto filling" status, other statuses may be usable as well. In example implementations, a quick chill status, a manual defogging status, a manual filling status, and auto the fog status may be used in addition to the auto filling status.

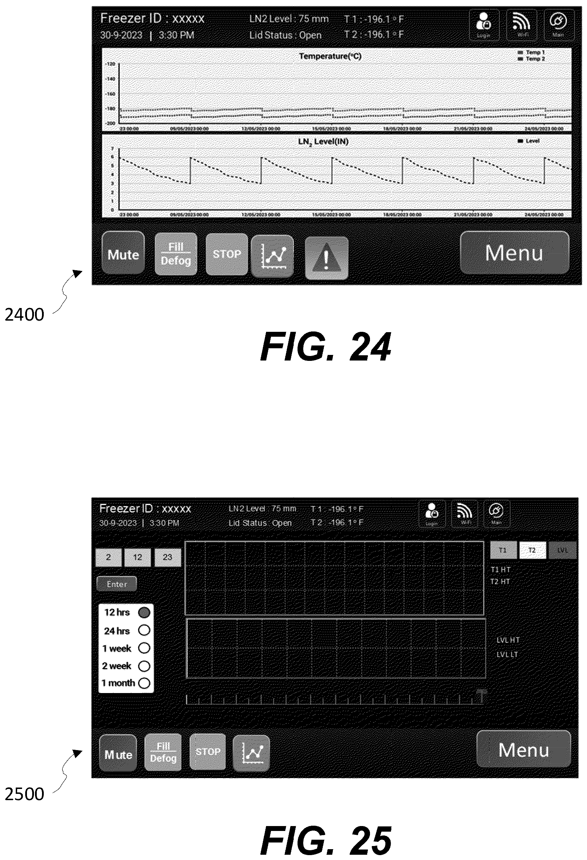

Fig. 24 illustrates a user interface 2400 displayable via the cryogenic storage assembly control system, indicating historical fill levels and temperatures. The user interface 2400 may be reached upon selection of the log button on the user interface 2200. In the example shown, the user interface 2400 displays a historical graph of temperature and liquid level over time. Fig. 25 illustrates a further user interface 2500 displayable via the cryogenic storage assembly control system, indicating fill levels and temperatures. The user interface 2500 may be an alternative to the user interface 2400, and may include selectable periods, for example a 12 hour period, a 24 hour period, a one week period, a two week period, or a one month period. Other graphical displays and options for amounts of time logged are possible as well.

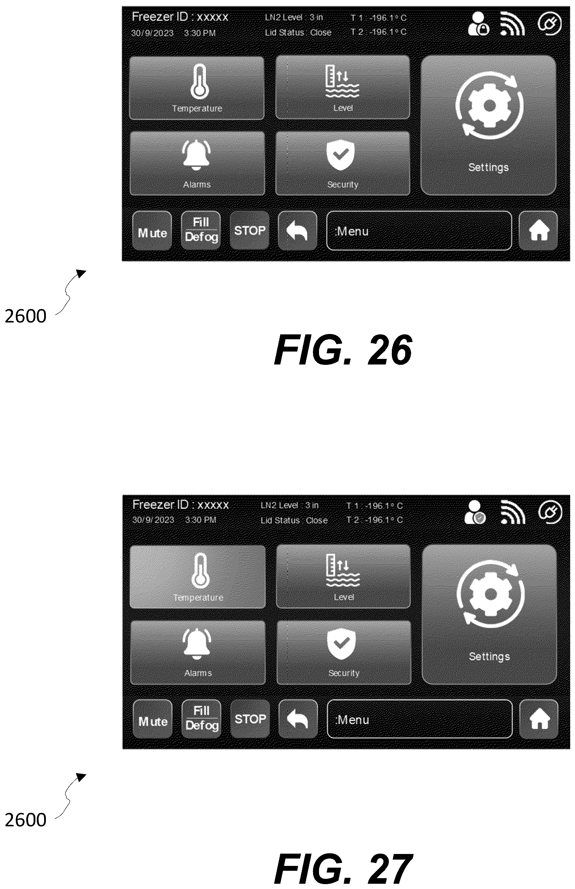

Fig. 26 illustrates a user interface 2600 displayable via the cryogenic storage assembly control system, providing a top-level control menu. The user interface 2600 may be reached by selecting a menu key in the user interface 2200 of Fig. 22. In the example shown, the user interface 2600 includes a temperature option, a level option, and alarms option, a security option, and a settings option. Fig. 27 illustrates the user interface 2600, displayable via the cryogenic storage assembly control system, providing top-level control menu after selection of the temperature option.

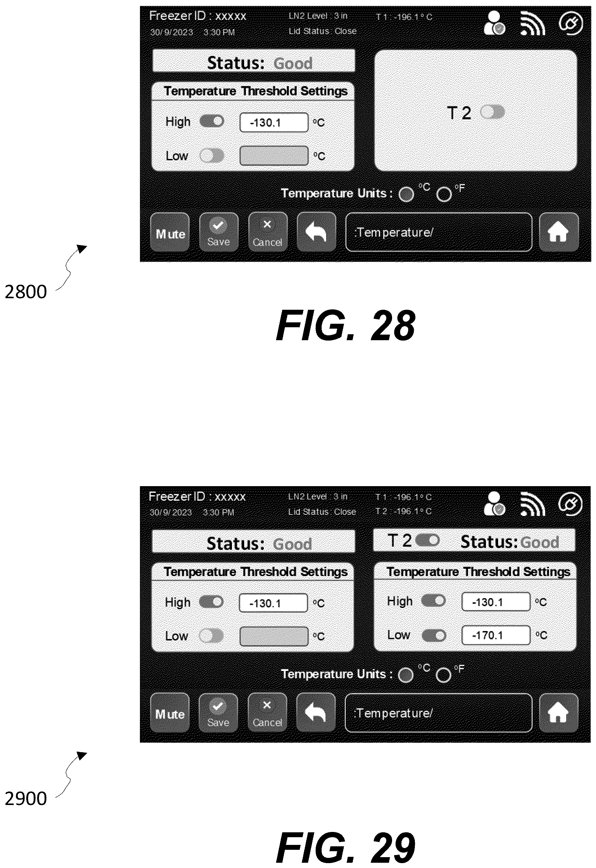

As seen in Fig. 28, a user interface 2800 may be presented that displays a temperature status, temperature threshold settings, and allows for selection of temperature units and a temperature sensor used to capture the temperature status. Fig. 29 illustrates a further user interface 2900 that may be presented after selecting the temperature sensor (shown as T2), in which high and low temperature threshold settings may be selected for the particular temperature sensor. Each threshold may be selectively activated, and a temperature threshold may be manually selected and entered.

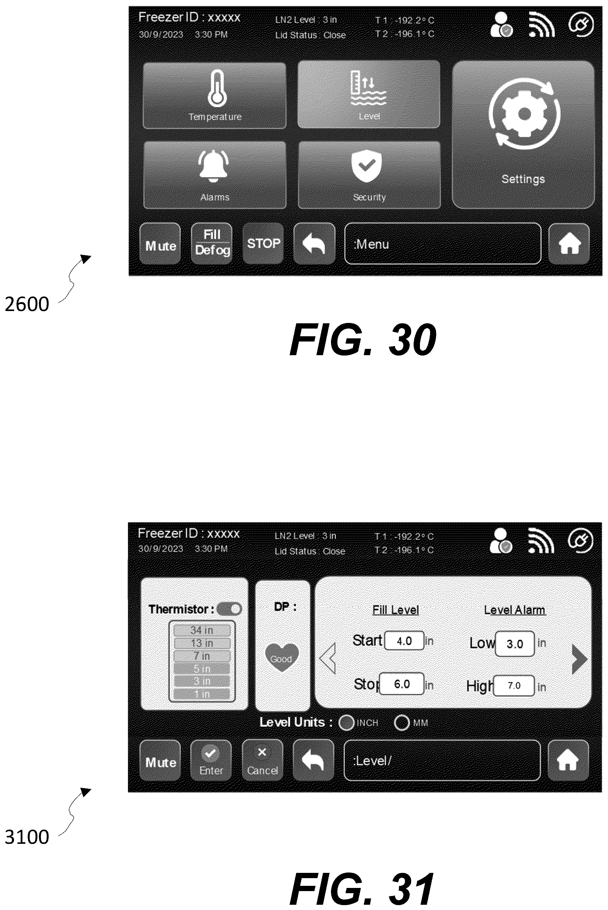

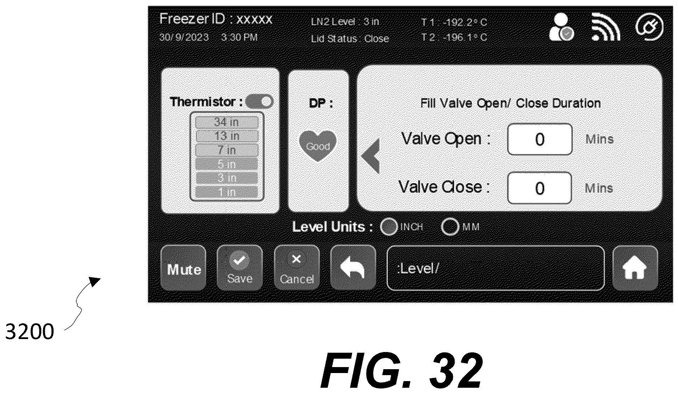

Fig. 30 illustrates user interface 2600, providing the control menu after selection of the level option. Upon selection, in Fig. 31, a further user interface 3100 may be presented that includes a thermistor-based level sensing status, a differential pressure-based level sensing status, and a fill level and alarm level threshold setting region. The thermistor-based level sensing status may be selectively activated, and may present a current liquid level within the cryogenic storage container based on sensed temperatures at the thermistors positioned at various depths within the cryogenic storage container. The differential pressure-based level sensing status displays a general health of a differential pressure system (e.g., that the pressures are within acceptable range, and the like). Additionally, fill level and alarm level depths may be defined. In Fig. 32, the user interface 3100 is illustrated, but with fill valve timing options available to be selected. In particular, fill valve timing (e.g., number of minutes open and closed) may be set.

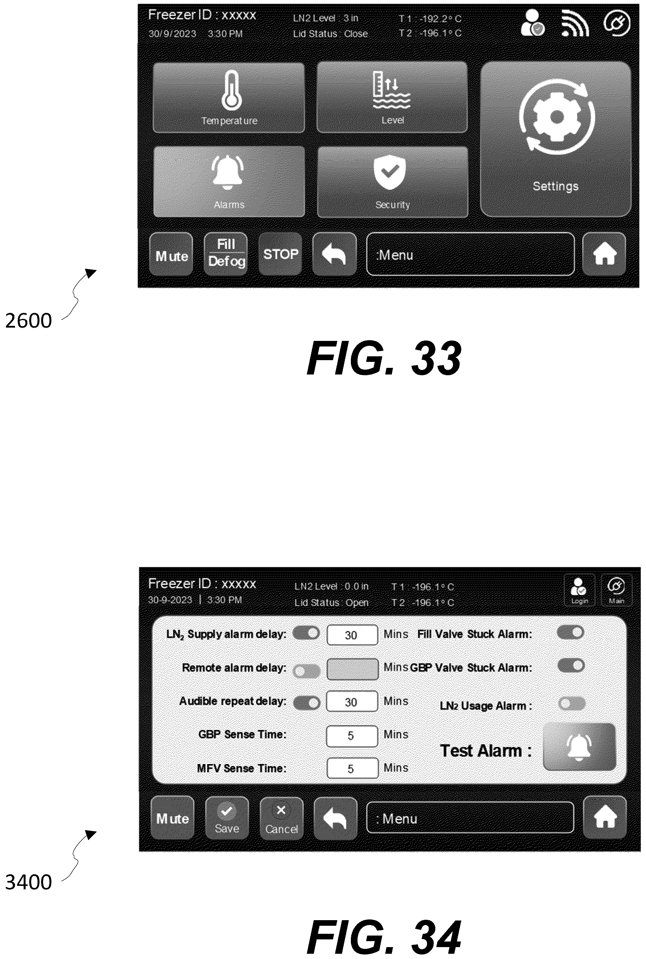

Fig. 33 illustrates a user interface 2600 after selection of the alarm option. Once selected, the user interface 3400 of Fig. 34 may be displayed, in which a cryogenic liquid supply alarm delay may be set, along with a fill valve stuck alarm, a remote alarm delay, other valve stuck alarms, and timing requirements.

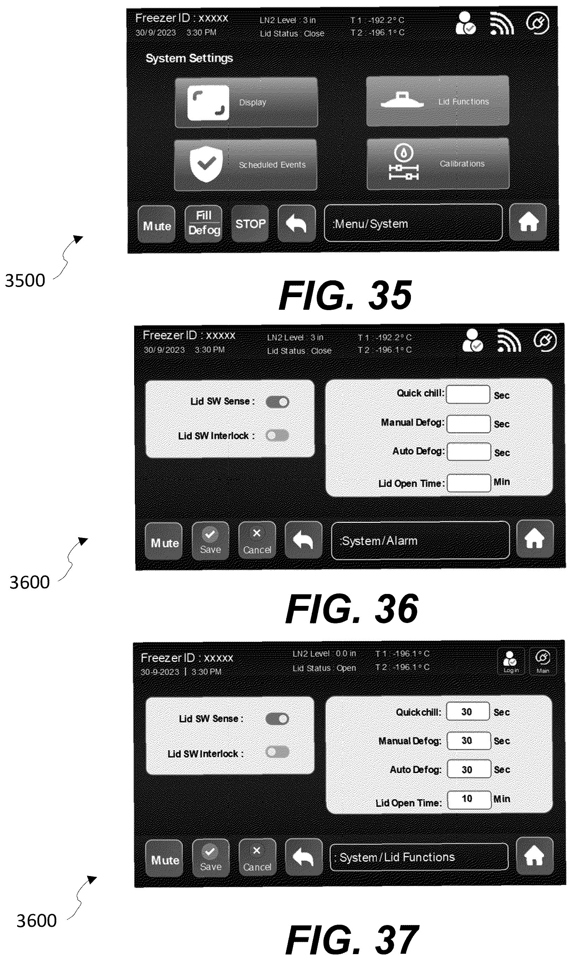

Fig. 35 illustrates a user interface 3500 showing a settings screen displayed in response to selection of a settings option. The user interface may include a display settings option, a lid functions option, a scheduled events option, and a calibrations option. In the example shown, the user interface 3300 displays the lid functions option as selected.

Fig. 36 illustrates a user interface 3600 displayable via the cryogenic storage assembly control system, illustrating adjustments within the lid options selected in the user interface 3500. In the example shown, a lid position sensing option and lid interlock option are presented, as well as timing options for initiating a quick chill, a manual defog, and auto defog, and a lid open time. Accordingly, a user may set specific options for default or channel in response to detection of lid opening, thereby ensuring that interior temperatures within the cryogenic storage container are maintained. As seen in Fig. 37, the user interface 3600 may allow for customized, manual entry of timing of various defog, chill, or other functions.

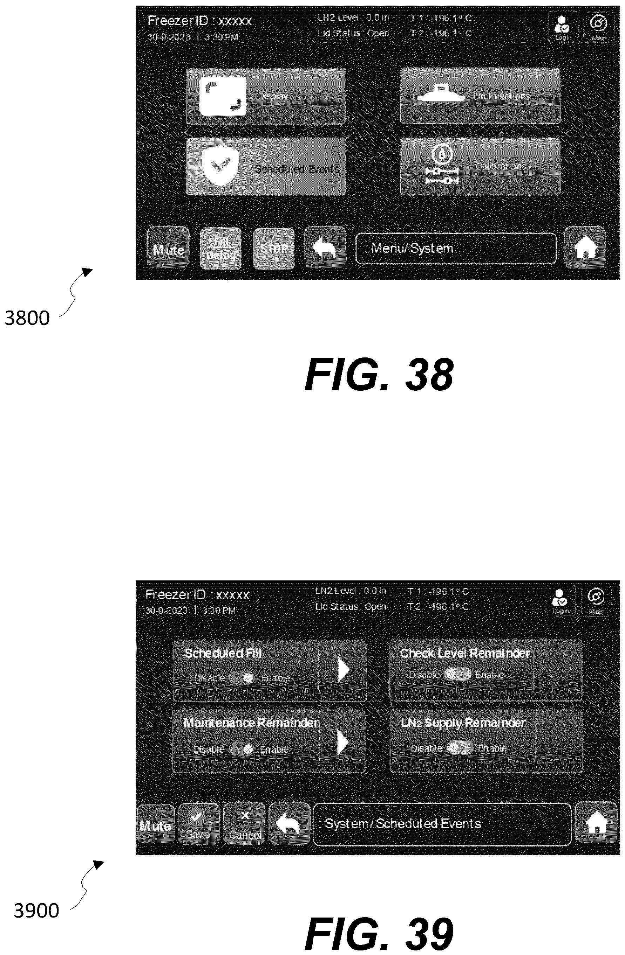

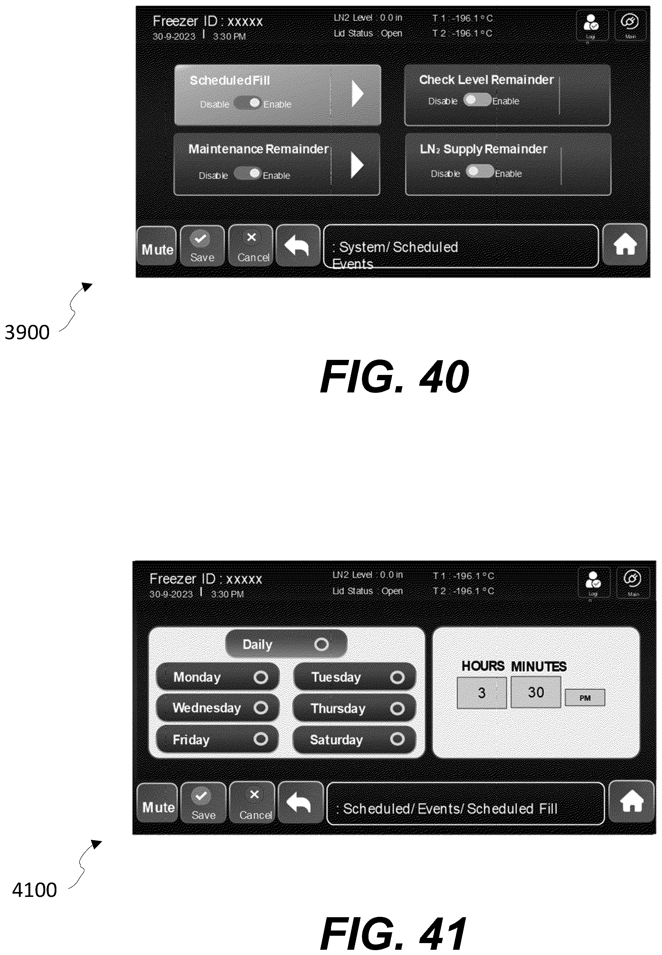

Fig. 38 illustrates a user interface 3800 displayable via the cryogenic storage assembly control system, providing a scheduled events menu option after selection of a settings option. Upon selection of the scheduled events menu, a further user interface 3900 of Fig. 39 is displayed, which allows for enabling of a scheduled fill, a check on liquid level remaining, a maintenance remainder check, and a cryogenic liquid supply remainder check. Upon selection of a particular option (e.g., the scheduled fill option as seen in Fig. 40), a user may be presented with a schedule and duration screen, such as seen in user interface 4100 of Fig. 41.

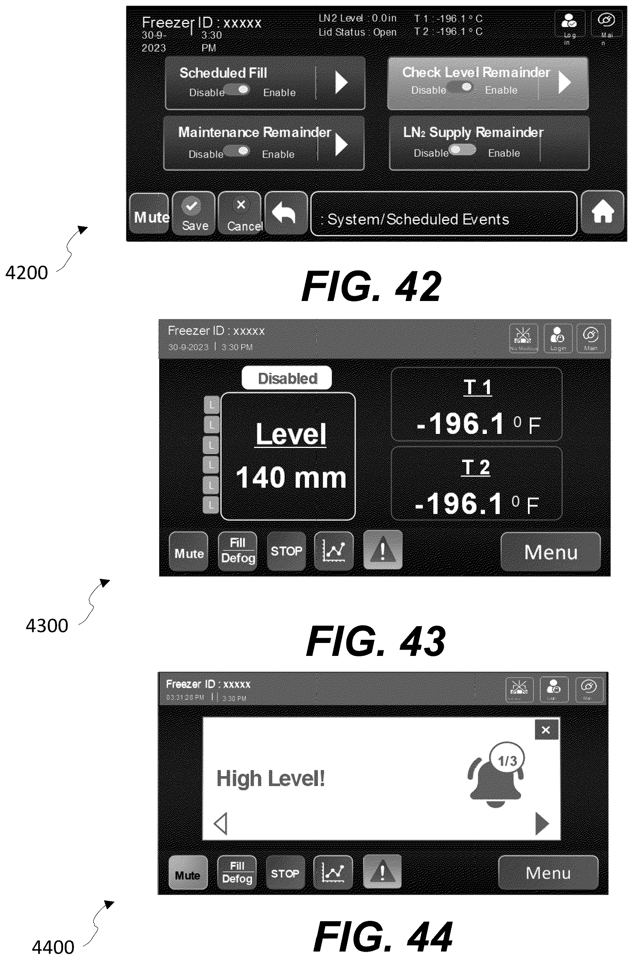

Fig. 42 illustrates a user interface 4200 depicting selection of a check level remainder option in a user interface corresponding generally to the user interface 3800 of Fig. 38. In this example, the level check may be set using similar timing screen as seen in Fig. 41.

Fig. 43 illustrates a user interface 4300 displayable via the cryogenic storage assembly control system, illustrating a level alert. The level alert may be depicted in response to a determination of disagreement between differential pressure level and thermistor-based level assessment, and may indicate a type of alarm that is presented. A user may select the particular alarm (e.g., by selecting the alarm button) and a further screen, such as in user interface 4400 of Fig. 44, may be displayed indicating further details of the particular alarm that was generated.

### IV. Cryogenic Storage Assembly, Operational Processes

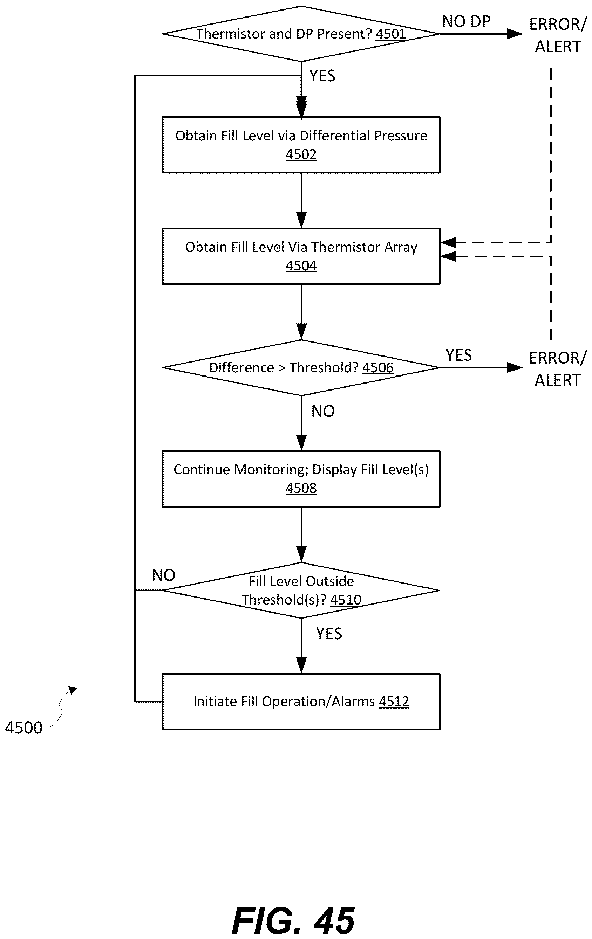

Referring now to Figs. 45-47, various operational processes of a cryogenic storage assembly are described. Such processes, including those used in calibration, monitoring, and use of a cryogenic storage container, provide further advantages regarding useability and reliability.

Fig. 45 illustrates a flowchart of a method 4500 of monitoring and controlling fill levels within a cryogenic storage container using a cryogenic storage control system, according to an example embodiment. In the example illustrated, the method 4500 is initiated, for example at initial operation of a cryogenic storage system, by determining whether a thermistor array and a differential pressure system are both present within the cryogenic storage assembly (step 4501). If no thermistor array exists, operational flow may proceed as normal. However, if no differential pressure system is present, an error or alert might be generated, indicating that such a system is missing or nonoperational.

If both a thermistor and differential pressure system are present, or if at least a differential pressure measurement system is present, flow within the overall process may proceed to obtaining a civil level estimate via the differential pressure system (step 4502). Obtaining a fill level from the differential pressure system may include, for example, determining a pressure at a top of an interior volume within the cryogenic storage container (e.g., above a fill line), as well as at a bottom of the interior volume (e.g., below the fill line). By comparing the pressures, and approximate fill level or liquid level may be determined.

Additionally, either before or after the differential pressure based fill level determination is performed, a fill level may be obtained using a thermistor array present within the cryogenic storage assembly (step 4504). Obtaining the fill level using the thermistor array may include obtaining signal values from each thermistor (e.g., voltage or resistance values), and determining, from those signal values, a temperature at each of a plurality of predetermined depths within the interior volume of the cryogenic storage container. The temperature at each of the predetermined depth may generally correspond to whether liquid or gas is present at that depth. Accordingly, it is possible to identify a fill level, at least approximately, with a sufficient number of and spacing of thermistors positioned at varying depths within the interior volume of the cryogenic storage container.

In the example as illustrated, a comparison is performed between the fill level determined using differential pressure, and the fill level determined using the thermistor array (at operation 4506). If a significant difference between the two syllables exists, it is likely that an error has occurred in one or the other of those fillable determining subsystems, or that they are otherwise inconsistent (e.g., one or both systems being miscalibrated). Accordingly, an error may be generated, or an alert may be generated, indicating the discrepancy between the two systems. Whether an alert or an error is generated might depend on which system indicates a discrepancy, and/or the severity of the discrepancy. For example, an alert may only be generated if no signal is obtained from the thermistor array, because it may be disabled or otherwise not present. However, an alert might be generated if a significant mismatch between the thermistor array and the differential pressure fill levels are determined. This may indicate a blockage in one or both of the inlet ports used for the differential pressure monitoring system or other error.

To the extent of an error or alert is generated, operation may return to reattempt determination of a fill level, for example via either the differential pressure measurement system or the thermistor array. Additionally, or in the alternative scenario where there is agreement between the differential pressure based fill level and the thermistor-based fill level, the fill level may continue to be monitored, and displayed on a user interface, such as may be presented on a display (step 4506). An example of such a display is illustrated in Figs. 22-23. Additionally, fill levels historically determined may be stored, and displayed via user interfaces such as those shown in Figs. 24-25.

In the example shown, a fill level determination operation 4510 response to determining whether the fill level is outside predetermined thresholds. In particular, a fill level may generally be agreed on by both the differential pressure based fill level system and the thermistor array, but that the fill level may be outside of desirable operating parameters. If not outside of the desired operating parameters (e.g., everything is working appropriately), operational flow may return to step 4502, to continue monitoring fill levels. However, if outside of operating parameters, one or more additional operations may be initiated by the control system (step 4512). The one or more additional operations may include operations such as initiating a fill of the storage container from a separate cryogenic liquid supply, such as seen in Fig. 1. Additionally, or alternatively, one or more alarms may be generated or alerts displayed on a user interface on a display, corresponding to error messages or liquid levels outside of predetermined thresholds. A user may then manually initiate a liquid level adjustment (e.g., by initiating a fill operation) or may view and clear any alerts if desired. The user may also manually adjust the liquid level alerts using the user interfaces previously described in Part III. Either after, or during such filled or alerting operations, operational flow may return to continue monitoring the fill level using differential pressure and/or the thermistor array, as described as associated with steps 4502, 4504.

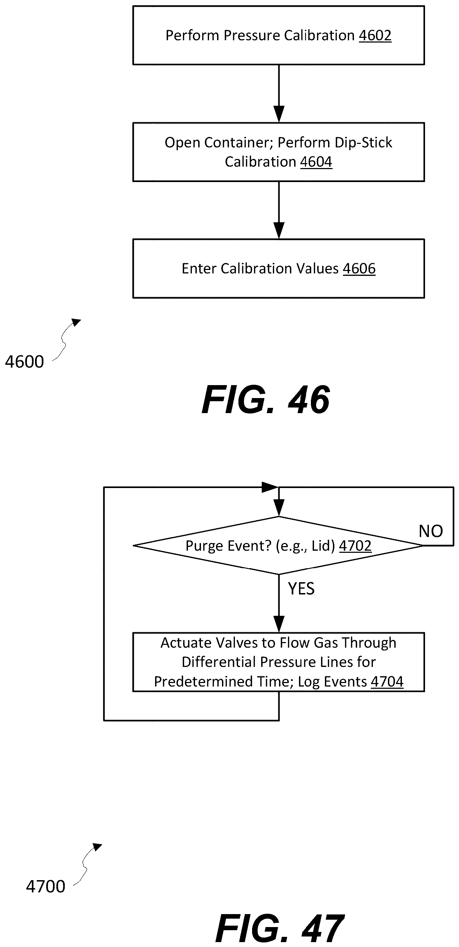

Fig. 46 illustrates a flowchart of a method 4600 of performing calibration of pressure and fill level in a cryogenic storage assembly, according to an example embodiment. By way of background, in existing systems a calibration process involves opening the cryogenic container to obtain access to the interior volume. A dip stick is installed vertically and lowered into the bottom of the container. Once left in the container for a brief period (e.g., approximately 5-10 seconds), the dip stick is removed. A frost line on the dip stick appears up to a level at which it was submerged. This "frost line" determination may be slightly adjusted, but generally reflects an actual liquid level within the container. The user may then enter the dip stick calibration level into a controller as a calibration setting.

In the example control method 4600 described herein, a pressure calibration process may be performed prior to performing a liquid level calibration process. In this way, a user need not await re-pressurization of the cryogenic storage container to perform the pressure calibration, but instead may immediately initiate use of a cryogenic storage system after performing the liquid level calibration described herein. Specifically, in the example shown, a pressure calibration is performed (at step 4602). The pressure calibration process is performed to calibrate a pressure reading from within the interior volume of the cryogenic storage container while at a pressure greater than an atmospheric pressure.

In the example shown, after the pressure calibration is performed, a liquid level calibration is performed using an open container method (step 4604). The liquid level calibration may include accessing the interior volume (thereby changing the interior pressure to an atmospheric pressure), inserting a dipstick, and viewing a frost line at which a liquid level exists. After the cryogenic storage container is closed, the user may use a user interface, such as described above, to enter calibration values for both pressure calibration and liquid level calibration (step 4606). The user may then immediately utilize the cryogenic storage container without requiring the user to wait for complete free pressurization before completing the pressure calibration process.

Fig. 47 illustrates a flowchart of a method 4700 of determining to perform a purge event and initiating a purge event at a cryogenic storage control system. A purge event may also be referred to as an "auto defog" event, and involves actuating a valve assembly, such as the one described above, to expel cryogenic gas that has evaporated within the interior volume of the cryogenic storage container through one or more fluid or gas lines associated with the overall cryogenic storage assembly. In the example shown, the control system determines whether a purge event has occurred (step 4702). A purge event may take a variety of forms. For example, a purge event may occur after a lid to the cryogenic storage container has been opened and subsequently closed. In such instances, condensation may form on one or more surfaces or conduits within the cryogenic storage assembly. Additionally, or alternatively, a purge event may occur periodically on a preset schedule (e.g., daily, weekly, or the like, at a predetermined time). Other types of purge events corresponding to times at which condensation might form or might have formed may also exist. Upon determining that a purge event has occurred, the control system may actuate one or more valves to flow evaporated cryogenic gas from the interior volume of the cryogenic storage container through conduit lines, such as the differential pressure lines (step 4704). The flowing of gas through such lines may expel condensing liquid, thereby avoiding a liquid or freeze-based blockage to occur within such lines. Additionally, the purge event may be logged within a memory of the cryogenic storage control system. Accordingly, if subsequent blockages or operational issues occur, the timing of any alerts generated in response to these types of operation alerts may be compared to the purge events to determine a likely cause of malfunction. In alternative implementations, the above steps may be performed in different orders, at different times of day, or may be initiated manually, in addition to being performed at particular instances.

Embodiments of the present invention, for example, are described above with reference to block diagrams and/or operational illustrations of methods, systems, and computer program products according to embodiments of the invention. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the invention as claimed in any way. The embodiments, examples, and details provided in this application are considered sufficient to convey possession and enable others to make and use the best mode of claimed invention. The claimed invention should not be construed as being limited to any embodiment, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate embodiments falling within the spirit of the broader aspects of the general inventive concept embodied in this application that do not depart from the broader scope of the claimed invention.

## Claims

1. A cryogenic storage assembly comprising:
a cryogenic storage container having an interior volume;
a differential pressure system configured to obtain a differential pressure measurement within the interior volume;
a thermistor array assembly positioned within the interior volume, the thermistor array including a plurality of thermistors positioned at predetermined depths within the interior volume;
a cryogenic storage control system including a processor and a memory, the cryogenic storage control system being configured to:
obtain, via the differential pressure system, a pressure at a top of the interior volume and a pressure proximate to a bottom of the interior volume, and determine an estimated fill level of cryogenic liquid within the interior volume;
obtain, via the thermistor array, a resistance of each thermistor indicative of a temperature at each of the predetermined depths, and determine a second estimated fill level of cryogenic liquid within the interior volume based on the temperature;
compare the estimated fill level to the second estimated fill level; and
based on a difference between the estimated fill level and the second estimated fill level being above a threshold, generate an alert indicating malfunction of at least one of the differential pressure system or the thermistor array assembly.

2. The cryogenic storage assembly of claim 1, wherein the memory stores control instructions for operation of the cryogenic storage control system, and wherein the control instructions cause the cryogenic storage control system to perform:
determining whether an event has occurred that triggers a purge process; and
in response to determining whether an event has occurred that triggers the purge purge process, actuating a valve assembly to route cryogenic gas through one or more conduits within the cryogenic storage assembly to expel moisture therefrom.

3. The cryogenic storage assembly of claim 2, wherein the event is selected from among a lid opening event, a daily scheduled event, or a detected blockage event.

4. The cryogenic storage assembly of claim 2, wherein the valve assembly includes a plurality of electronically-actuatable valves.

5. The cryogenic storage assembly of claim 2, wherein the control instructions further cause the cryogenic storage control system to perform a calibration process comprising:
performing a pressure calibration process to calibrate a pressure reading from within the interior volume of the cryogenic storage container while at a pressure greater than an atmospheric pressure;
after performing the pressure calibration process, initiating a fill level calibration process; and
receiving calibration values as to one or both of the pressure calibration process or the pressure calibration process.

6. The cryogenic storage assembly of claim 1, further comprising a lighting assembly positioned within the interior volume, the lighting assembly including one or more light emitting diodes positioned on a circuit board removably mounted to a lighting connector.

7. The cryogenic storage assembly of claim 6, wherein the lighting assembly includes a lighting element and a lighting element drive unit.

8. The cryogenic storage assembly of claim 1, wherein the plurality of thermistors includes a first thermistor at a depth of 1 inch, a second thermistor at a depth of 3 inches, a third thermistor at a depth of 5 inches, a fourth thermistor at a depth of 7 inches, a fifth thermistor at a depth of 13 inches, and a sixth thermistor at a depth of 34 inches.

9. The cryogenic storage assembly of claim 1, wherein, upon failure of the differential pressure system, the cryogenic storage control system is configured to determine a liquid level within the interior volume based only on signals obtained from the thermistor array assembly.

10. The cryogenic storage assembly of claim 1, wherein, upon determination at the cryogenic storage control system that a liquid level determined from sensed signals obtained from the differential pressure system is inconsistent with a liquid level determined from sensed signals obtained from the thermistor array assembly, generating a graphical alert.

11. The cryogenic storage assembly of claim 1, wherein the cryogenic storage control system includes a main control unit and an input/output unit communicatively connected thereto.

12. A method of operating a cryogenic storage system, the method comprising:
obtaining, via a differential pressure system, a pressure at a top of an interior volume of a cryogenic storage container and a pressure proximate to a bottom of the interior volume;
determining an estimated fill level of cryogenic liquid within the interior volume;
obtaining, via a thermistor array disposed within the interior volume and including a plurality of thermistors positioned at predetermined depths within the interior volume, a resistance of each thermistor indicative of a temperature at each of the predetermined depths;
determining a second estimated fill level of cryogenic liquid within the interior volume based on the temperature;
comparing the estimated fill level to the second estimated fill level; and
based on a difference between the estimated fill level and the second estimated fill level being above a threshold, generating an alert indicating malfunction of at least one of the differential pressure system or the thermistor array assembly.

13. The method of claim 12, further comprising performing an automated purge process, the automated purge process including actuating one or more valves to route a gaseous form of the supply liquid through one or more differential pressure lines included in the cryogenic storage assembly to expel condensed moisture therein.

14. The method of claim 13, wherein the automated purge process is programmed to be executed during an initial fill process.

15. The method of claim 13, wherein the automated purge process is programmed to be executed periodically.

16. The method of claim 12, further comprising performing a calibration process comprising:
performing a pressure calibration process to calibrate a pressure reading from within the interior volume of the cryogenic storage container while at a pressure greater than an atmospheric pressure;
after performing the pressure calibration process, initiating a fill level calibration process; and
receiving calibration values as to one or both of the pressure calibration process or the pressure calibration process.
